# EUROPEAN PATENT SPECIFICATION

(11) **EP 4 534 802 B1**
(45) Date of publication and mention of the grant of the patent: **25.11.2026**
(21) Application number: 24204354.5
(22) Date of filing: 02.10.2024
(51) Int. Cl.: F01D 5/28, F01D 5/18, F01D 9/06, C04B 35/80

(54) **AIRFOIL, GAS TURBINE ENGINE AND METHOD OF FABRICATING AN AIRFOIL**
SCHAUFEL, GASTURBINENTRIEBWERK UND VERFAHREN ZUM HERSTELLEN EINER SCHAUFEL
AUBE, MOTEUR À TURBINE À GAZ ET PROCÉDÉ POUR FABRIQUER UNE AUBE

(30) Priority: 04.10.2023 US 202318480698
(43) Date of publication of application: 09.04.2025
(73) Proprietor: RTX Corporation, Farmington, CT 06032 (US)
(72) Inventor: ROACH, James T., Farmington, 06032 (US); BANHOS, Jonas, Farmington, 06032 (US); KIM, Russell, Farmington, 06032 (US); SURACE, Raymond, Farmington, 06032 (US)
(74) Representative: Dehns

(56) References cited:
- US-A1- 2017 328 216
- US-A1- 2018 328 189
- US-A1- 2019 330 988

## Description

### TECHNICAL FIELD

The present invention relates to an airfoil, a gas turbine engine, and a method of fabricating an airfoil.

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature core gas flow. The high-pressure and temperature core gas flow expands through the turbine section to drive the compressor and the fan section. The compressor section may include low and high pressure compressors, and the turbine section may also include low and high pressure turbines.

Airfoils in the turbine section are typically formed of a superalloy and may include thermal barrier coatings to extend temperature capability and lifetime. Ceramic matrix composite ("CMC") materials are also being considered for airfoils. Among other attractive properties, CMCs have high temperature resistance. Despite this attribute, however, there are unique challenges to implementing CMCs in airfoils.

US 2019/330988 A1, US 2018/328189 A1 and US 2017/328216 A1 disclose prior art CMC airfoils.

### SUMMARY

According to an aspect of the present invention, there is provided an airfoil according to claim 1.

According to another aspect of the present invention, there is provided a method of fabricating an airfoil according to claim 11.

Features of embodiments of the invention are set forth in the dependent claims.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 illustrates a gas turbine engine.
Figure 2A illustrates an airfoil section.
Figure 2B illustrates the airfoil section from a different perspective.
Figure 3 illustrates the airfoil section with a cutaway portion to reveal a cooling passage.
Figure 4 illustrates a sectioned view through a portion of the cooling passage.
Figure 5 illustrates a sectioned view taken radially through the plenum of the cooling passage.
Figure 6 illustrates a solid volume model view of the cooling passage.
Figure 7A illustrates straight, uniform cross-section intermediate passage sections of a cooling passage.
Figure 7B illustrates straight, unequal cross-section intermediate passage sections of a cooling passage.
Figure 7C illustrates straight, divergent cross-section intermediate passage sections of a cooling passage.
Figure 7D illustrates straight, uniform cross-section intermediate passage sections of a cooling passage that are branched.
Figure 7E illustrates straight, divergent cross-section intermediate passage sections of a cooling passage that are branched.
Figure 7F illustrates radially curved intermediate passage sections of a cooling passage.
Figure 8 depicts a method of fabricating an airfoil section.

Like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

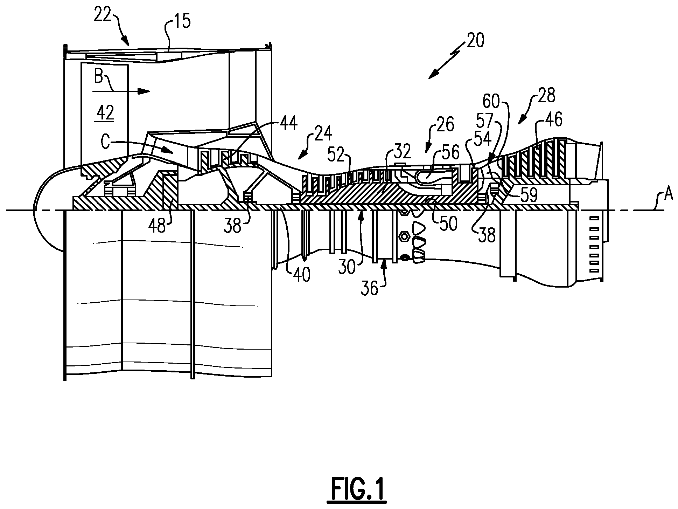

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

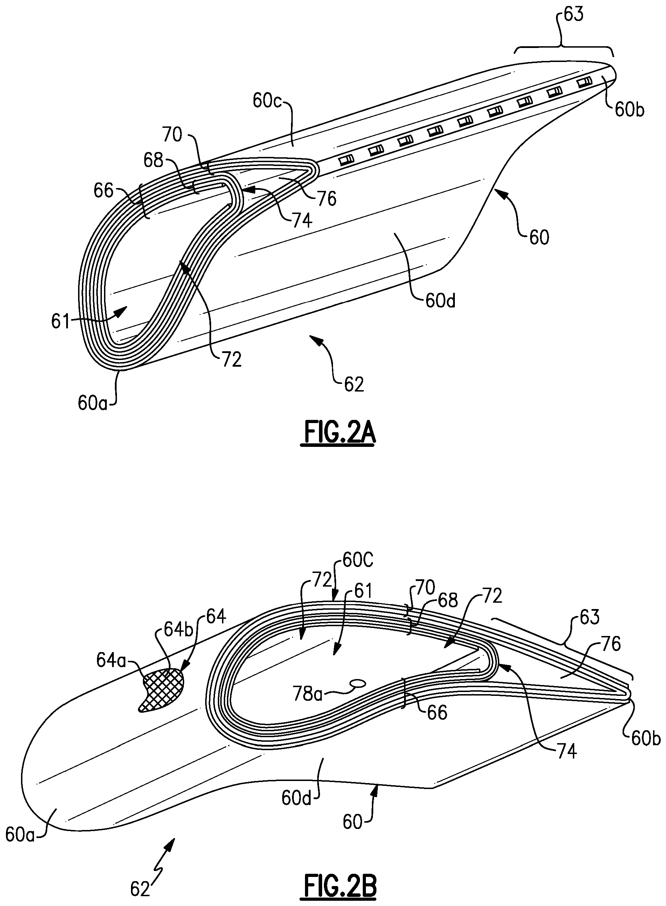

Figure 2A (view from aft-looking-forward) and Figure 2B (view from forwardlooking-aft) illustrate sectioned views of an airfoil section 60 through a mid-span region of an airfoil 62. For example, the airfoil 62 is a turbine vane from the turbine section 28 of the engine 20 (e.g., a high or low pressure turbine section), and there are a plurality of turbine vanes arranged in a circumferential row in the turbine section 28. Although not shown, the airfoil 62 can additionally include one or more platforms attached with the airfoil section 60. The airfoil section 60 is hollow and defines an internal cavity 61, a leading edge 60a, a trailing edge region 63 having a trailing edge 60b, a suction side 60c, and a pressure side 60d. The trailing edge region 63 generally refers to the aft portion of the airfoil section 60 and includes the aft portion of the internal cavity 61 and the trailing edge 60b, which is the rear-most edge of the airfoil section 60.

The airfoil section 60 is formed of a ceramic matrix composite (CMC) 64. Referring to the cutaway section in Figure 2B, the CMC 64 includes ceramic fibers 64a that are disposed in a ceramic matrix 64b. The CMC 64 may be, but is not limited to, a SiC/SiC composite in which SiC fibers are disposed within a SiC matrix. The ceramic fibers 64a are provided in fiber plies 66 (e.g., fabrics) that may be woven or braided and may collectively include plies of different fiber weave configurations.

The fiber plies 66 include core fiber plies 68 and skin fiber plies 70. The core fiber plies 68 define a radial tube 72 that circumscribes and immediately borders the internal cavity 61. The skin fiber plies 70 define the exterior profile of the airfoil section 60 and wrap around the core fiber plies 68 from the pressure side 60d in the trailing edge region 63, through the leading edge 60a, and to the suction side 60c in the trailing edge region 63. In the illustrated example, there are four core fiber plies 68 and three skin fiber plies 70, although it is to be understood that the numbers of core and skin fiber plies 68/70 could be varied.

The radial tube 72 has a radiused end 74 in the trailing edge region 63. Except for the inner-most one of the core fiber plies 68, all of the core fiber plies 68 wrap completely around the internal cavity 61. The inner-most one of the core fiber plies 68 terminates short of the radiused end 74, as the small radius may exceed the capability of the ply to bend without fiber tow distress.

There is a filler element 76 in the trailing edge region 63, aft of the internal cavity 61. A filler element in general is often colloquially referred to as a "noodle" and serves as a non-structural space-filler, usually in an interstice where other fiber plies bend. Here, the filler element 76 fills in the region aft of the radiused end 74 and is sandwiched between the skin fiber plies 70 on the pressure side 60d and the skin fiber plies 70 on the suction side 60c. The filler element 76 may be formed of, but is not limited to, a bundle of densified ceramic fibers (a CMC) or a monolithic ceramic.

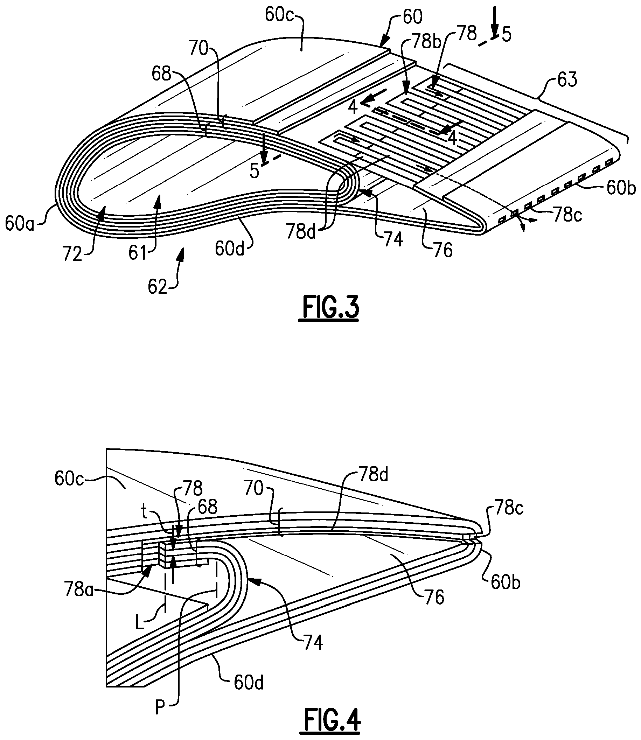

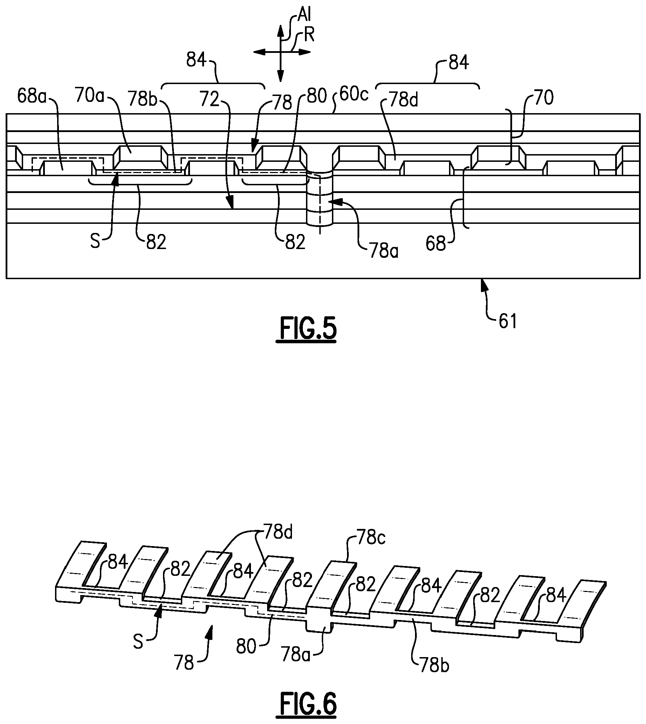

The sides 60c/60d and the trailing edge region 63 may require cooling. In that regard, as shown in Figure 3, the airfoil section 60 includes at least one cooling passage 78, with inlet 78a (Figure 2B), for a flow of cooling air. Figure 3 illustrates a cutaway view showing portions of the cooling passage 78. For example, the cooling air is bleed air from the compressor section 24 that is provided into the internal cavity 61 and flows from the internal cavity 61 into the cooling passage(s) 78. Figures 4 and 5 show sectioned views through portions of the cooling passage 78, and Figure 6 illustrates an isolated view of the cooling passage 78 as a solid volume. The cooling passage 78 is made up of several sections, including at least one inlet orifice section 78a that opens to the internal cavity 61 and extends through the core fiber plies 68, a radially-elongated multi-dimensional plenum 78b connected with the inlet orifice section 78a, a plurality of outlet orifice sections 78c that extend through the trailing edge 60b, and a plurality of intermediate passage sections 78d. In the illustrated example, the cooling passage 78 has a single inlet section 78a and multiple outlet orifice sections 78c. Alternatively, there may be additional inlet sections 78a, but the number of inlet sections 78a need not be equal to the number of outlet orifice sections 78c. The inlet orifice section 78a extends toward the suction side 60c such that the intermediate passage sections 78d run along the suction side 60c. Alternatively, the inlet orifice section 78a extends toward the pressure side 60d such that the intermediate passage sections 78d run along the pressure side 60d. In a further example, there is an inlet orifice section 78a that extends toward the suction side 60c such that intermediate passage sections 78d run along the suction side 60c, and there is also an inlet orifice section 78a that extends toward the pressure side 60d such that there are intermediate passage sections 78d that run along the pressure side 60d.

The inlet section 78a opens to the internal cavity 61 and serves for entry of the cooling air into the passage 78, and the outlet sections 78c extend through the trailing edge 60b, such as along a centerline of the trailing edge 60b, and serve to discharge spent cooling air to the exterior of the airfoil section 60 (into the core gaspath C). The plenum 78b serves to distribute the cooling air to the intermediate passage sections 78d, which connect the plenum 78b to the outlet orifice sections 78c. The plenum 78b extends along the outer-most one of the core fiber plies 68 (designated 68a in Figure 5) and the inner-most one of the skin fiber plies 70 (designated 70a in Figure 5), where "inner" and "outer" are relative to the internal cavity 61. The intermediate passage sections 78d are bound by at least one of the skin fiber plies 70 and the filler element 76.

As indicated above, the plenum 78b is multi-dimensional. As used herein, the term "multi-dimensional" refers to the path (e.g., as represented by a central axis) of plenum 78b having portions that extend along the radial direction (relative to engine axis A) and also portions that extend along at least one direction that is orthogonal to the radial direction, such as an axial or chordal direction. In the example illustrated in Figure 5, the path of the plenum 78b is designated at 80. The outer-most core fiber ply 68a contains a row of radially-extending channel segments 82 (i.e., slots) and the inner-most skin fiber ply 70a contains a row of radially spaced channel segments 84 (slots) that is radially offset from the channel segments 82 such that each one of the channel segments 84 partially overlaps (at its radial ends) two of the channel segments 82 (at their radial ends). The path 80 thus runs alternately through the channel segments 82 and 84 such that the plenum 78b has serpentine shape S. That is, the path 80 runs radially (radial direction R, Figure 5) within the channel segments 82 and 84, and where the segments 82 and 84 overlap, the path 80 turns axially or chordally (Figure 5, axis A1). The serpentine shape has the effect that the cooling air that enters inlet 78a flows in a circuitous path to enhance thermal absorption while also being distributed to the intermediate passage sections 78d.

The radiused end 74 of the radial tube 72 is an area that may be under considerable stress in the airfoil section 60. For example, the core fiber plies 68 are under bending stresses from bending at the radius in the end 74, and dynamic stresses on the airfoil section 60 may concentrate at this area due to the bending. Such stresses on a CMC may tend to cause delamination between fiber plies. In this regard, the proposition of using an orifice in the radiused end is undesirable, as it would cause a discontinuity in the ceramic fibers and thereby potentially weaken the CMC in that area. Rather, in the example shown (see Figure 4), the inlet section 78a of the passage 78 is at a location L that is axially forward of the radiused end 74, so as to circumvent the end 74 and thus avoid inclusion of a discontinuity in the end 74. For example, the radiused end 74 is demarked by a location P, at which the core fiber plies 68 begin to bend, and the location L is forward of location P. In one example, in order to provide a margin from the location P, the location L is positioned based on a number N of the core fiber plies 68 and a ply thickness t of the core fiber plies 68. For instance, the location L is forward of location P by a distance (to the closest edge of the inlet section 78a) that is greater than the product of N and t. In a further example, in order to ensure an adequate margin from the location P, the distance is a multiple of N, t, and a multiplier X, where X is from five to ten. Although depicted together, it is to be understood that a plenum 78b as disclosed could be used without the location L of the inlet orifice section 78a, and vice versa, the location L could be used without use of a plenum 78b.

In further embodiments, the location L is substantially further forward of location P by a multiple of the distance (the product of N and t). In such examples, the intermediate passage sections 78d are longer and thus run over a longer distance along the suction side 60c (or pressure side 60d), thereby providing additional cooling of the side 60c (or 60d).

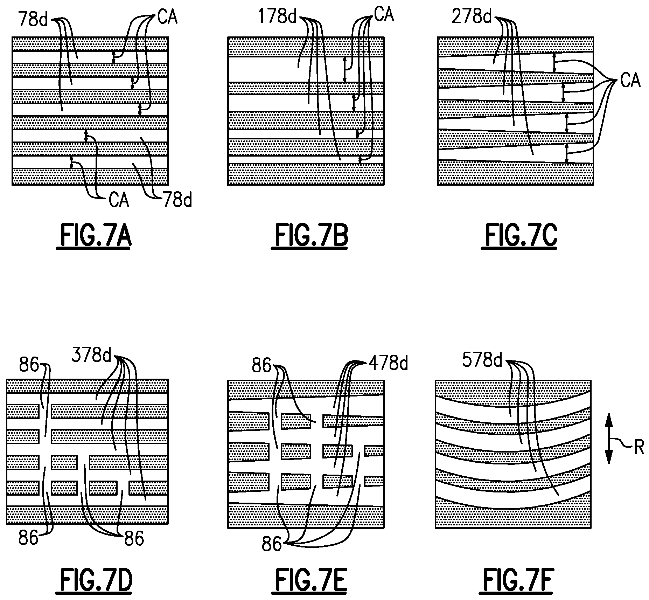

Figure 7A illustrates the intermediate passage sections 78d. Each of the intermediate passage sections 78d has a cross-sectional area, designated as CA. In this example, the sections 78d are straight (axially), the cross-sectional areas CA are constant over the full lengths of the intermediate passage sections 78d, and the cross-sectional areas CA are equivalent. Such a configuration provides relatively uniform flow and cooling. Figures 7B, 7C, 7D, 7E, and 7F each illustrate additional example configurations of intermediate passage sections. In Figure 7B, the cross-sectional areas CA are constant over the lengths but are non-equivalent. Such a configuration permits increased flow of the cooling air to some (the larger ones) of the sections 178d and thus increased cooling in the vicinity of those sections, while the other (smaller ones) of the sections 178d receive less cooling air flow and provide less cooling. In Figure 7C, the sections 278d are divergent such that the respective cross-sectional areas CA increase over their lengths from the plenum 78b to the outlet orifice sections 78c. Such a configuration diffuses and slows the cooling air flow, allowing for increased thermal pickup.

In Figure 7D, the sections 378d are the same as the sections 78d (straight, constant uniform cross-sections) except that there are branch passage sections 86 that interconnect the sections 378d. The branch passage sections 86 extend laterally to the length of the sections 378d, which in the airfoil section 60 is radially. Such a configuration permits increased flow of the cooling air to some of the sections 378d and thus increased cooling in the vicinity of those sections, while other the sections 378d receive less cooling air flow and provide less cooling. In Figure 7E, the sections 478d are similar to those of Figure 7C but also include branch passage sections 86 as in Figure 7D. In Figure 7F, the sections 578d are radially curved. Such a configuration provides distributed cooling to, for example, match a thermal profile or thermal gradient. As will be appreciated, in a further example, the sections 578d may include branch passage sections 86 as in the prior examples.

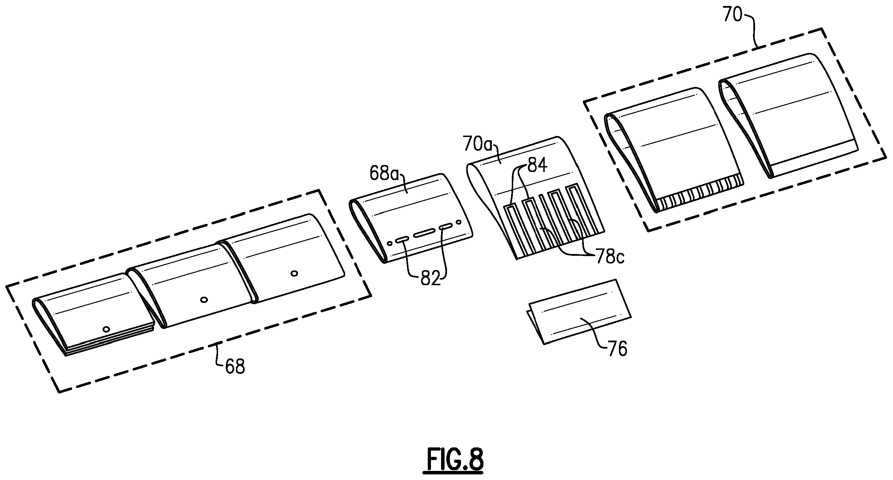

Figure 8 depicts a method for fabricating the airfoil section 60, which is generally a fiber ply lay-up process. Unless otherwise specified, the fiber plies that are laid-up are initially devoid of any ceramic matrix material. Core fiber plies 68 are identified on the left side of the figure. These core fiber plies 68 are first laid-up to form what will be the radial tube 72 that circumscribes the internal cavity 61. As an example, the core fiber plies 68 are sequentially laid-up on a mandrel or other support surface. After lay-up of the initial, inner-most core fiber ply 68, the next core fiber plies 68 are wrapped around the initial core fiber ply 68. The core fiber plies 68 are then partially densified with ceramic matrix material, after which an additional, outer-most core fiber ply 68a is laid-up around the partially densified core fiber plies 68, to form a core preform. The outer-most core fiber ply 68a includes pre-formed slots that will provide the aforementioned channel segments 82. The filler element 76 is then arranged aft of the internal cavity 6 of the core preform. The inner-most skin fiber ply 70a is then laid-up to wrap around the core preform and the filer element 76, to form a first intermediate preform. The first intermediate preform is then at least partially densified with additional ceramic matrix material. Slots are then formed in the inner-most skin fiber ply 70a to form what will be the intermediate passage sections 78d. The slots of the inner-most skin fiber ply 70a partially overlap with the slots in the outer-most core fiber ply 68a to provide what will be the radially-elongated multi-dimensional plenum 78b. The inlet orifice section 78a is then formed, such as by drilling, through the core preform to the internal cavity 61, to produce a second intermediate preform. One or more additional skin fiber plies 70 are then laid-up to wrap around the second intermediate preform to form a final preform, which is then fully densified with additional ceramic matrix material. After this densification step, the outlet orifice sections 78c are formed through the trailing edge 60b, such as by a machining or drilling process.

A typical lay-up process might involve laying -up all of the fiber plies to form a fiber preform and then fully densifying the fiber preform. In the above method, however, the densifications are staged, to occur prior to all of the fiber plies being laid-up. For example, the ceramic matrix in the above densifications is formed by, but is not limited to, chemical vapor infiltration (CVI), melt infiltration (MI), a hybrid of CVI and MI, and/or polymer infiltration and pyrolysis (PIP). The disclosed methodology enables at least the intermediate passage sections 78d, inlet orifice section 78a, and outlet orifice section 78c to be formed after one or more densification steps. While machining and/or drilling is involved and may be somewhat time-consuming, forming these sections of the cooling passage 78 after densification permits precise control over the location and geometry of the passage sections.

Although a combination of features is shown in the illustrated examples, not all of them need to be combined to realize the benefits of various embodiments of this invention. In other words, a system designed according to an embodiment of this invention will not necessarily include all of the features shown in any one of the Figures or all of the portions schematically shown in the Figures. Moreover, selected features of one example embodiment may be combined with selected features of other example embodiments.

## Claims

1. An airfoil (62) comprising:
an airfoil section (60) defining pressure and suction sides (60c, 60d), a leading edge (60a), and a trailing edge region (63) including a trailing edge (60b), the airfoil section (60) being formed of a ceramic matrix composite (64) that includes fiber plies (66) disposed in a ceramic matrix (64b), the fiber plies (66) including:
core fiber plies (68) defining a radial tube (72) that circumscribes an internal cavity (61), and
skin fiber plies (70) defining an exterior of the airfoil section (60) and wrapping around the core fiber plies (68) from the pressure side (60d) of the trailing edge region (63), through the leading edge (60a), and to the suction side (60c) of the trailing edge region (63); and
at least one cooling passage (78) including:
at least one inlet orifice section (78a) opening to the internal cavity (61) and extending through the core fiber plies (68);
**characterised in that**:
the airfoil (62) further comprises a filler element (76) in the trailing edge region (63) aft of the internal cavity (61) and sandwiched between the skin fiber plies (70) on the pressure side (60d) and the skin fiber plies (70) on the suction side (60c); and
the at least one cooling passage (78) further includes:
a radially-elongated multi-dimensional plenum (78b) connected with the at least one inlet orifice section (78a),
a plurality of outlet orifice sections (78c) extending through the trailing edge (60b), and
a plurality of intermediate passage sections (78d) bound by at least one of the skin fiber plies (70) and the filler element (76) and connecting the radially-elongated multi-dimensional plenum (78b) with the plurality of outlet orifice sections (78c).

2. The airfoil (62) as recited in claim 1, wherein the radially-elongated multi-dimensional plenum (78b) has a serpentine shape.

3. The airfoil (62) as recited in claim 2, wherein the serpentine shape is provided by a first row of radially-spaced channel segments (82) in one of the core fiber plies (68) and a second row of radially-spaced channel segments (84) in one of the skin fiber plies (70) that is radially offset from the first row such that each one of the radially-spaced channel segments (84) of the second row partially overlaps two of the radially-spaced channel segments (82) of the first row.

4. The airfoil (62) as recited in claim 1, 2 or 3, wherein each of the intermediate passage sections (78d) is of an equivalent constant cross-sectional area.

5. The airfoil (62) as recited in claim 1, 2 or 3, wherein the intermediate passage sections (78d) are of non-equivalent constant cross-sectional areas.

6. The airfoil (62) as recited in claim 1, 2 or 3, wherein each of the intermediate passage sections (78d) is divergent.

7. The airfoil (62) as recited in any preceding claim, further including branch passage sections (86) that interconnect the intermediate passage sections (78d).

8. The airfoil (62) as recited in any preceding claim, wherein the intermediate passage sections (78d) are radially curved.

9. The airfoil (62) as recited in any preceding claim, wherein the radial tube (72) has a radiused end (74) in the trailing edge region (63), and the at least one inlet orifice section (78a) opens to the internal cavity (61) at a location forward of the radiused end (74).

10. A gas turbine engine (20) comprising:
a compressor section (24);
a combustor (56) in fluid communication with the compressor section (24); and
a turbine section (28) in fluid communication with the combustor (56), the turbine section (28) having airfoils (62) according to any preceding claim.

11. A method of fabricating an airfoil (62) that has an airfoil section (60) defining pressure and suction sides (60c, 60d), a leading edge (60a), and a trailing edge region (63) including a trailing edge (60b), the method comprising:
laying-up first core fiber plies (68) to form a radial tube (72) that circumscribes an internal cavity (61);
partially densifying the first core fiber plies (68) with ceramic matrix material;
laying-up an additional core fiber ply (68) around the partially densified first core fiber plies (68) to form a core preform, wherein the additional core fiber ply (68) includes pre-formed slots;
arranging a filler element (76) aft of the internal cavity (61) of the core preform;
laying-up a first skin fiber ply (70a) around the core preform and the filler element (76) to form a first intermediate preform;
at least partially densifying the first intermediate preform with additional ceramic matrix material;
in the at least partially densified first skin fiber ply (70a), forming intermediate passage sections (78d), wherein the intermediate passage sections (78d) partially overlap with the preformed slots to provide a radially-elongated multi-dimensional plenum (78b);
forming at least one inlet orifice section (78a) through the core preform to the internal cavity (61) to provide a second intermediate preform;
laying-up one or more additional skin fiber plies (70) around the second intermediate preform to form a final preform;
densifying the final preform with additional ceramic matrix material; and forming a plurality of outlet orifice sections (78c) that extend through the trailing edge (60b), the at least one inlet orifice section (78a), the radially-elongated multi-dimensional plenum (78b), the intermediate passage sections (78d), and the plurality of outlet orifice sections (78c) being connected to provide at least one cooling passage (78).

## Patentansprüche

1. Ein Schaufelblatt (62), umfassend:
einen Schaufelblattabschnitt (60), der eine Druck- und eine Saugseite (60c, 60d), eine Vorderkante (60a) und einen Hinterkantenbereich (63) einschließlich einer Hinterkante (60b) definiert, wobei der Schaufelblattabschnitt (60) aus einem keramischen Matrix-Verbundwerkstoff (64) gebildet ist, der Faserlagen (66) umfasst, die in einer keramischen Matrix (64b) angeordnet sind, wobei die Faserlagen (66) umfassen:
Kernfaserlagen (68), die ein Radialrohr (72) definieren, das einen Innenhohlraum (61) umschließt, und
Hautfaserlagen (70), die eine Außenfläche des Schaufelblattabschnitts (60) definieren und die Kernfaserlagen (68) von der Druckseite (60d) des Hinterkantenbereichs (63) über die Vorderkante (60a) bis zur Saugseite (60c) des Hinterkantenbereichs (63) umschlingen; und
mindestens einen Kühlkanal (78), umfassend:
mindestens einen Einlassöffnungsabschnitt (78a), der sich zum Innenhohlraum (61) öffnet und sich durch die Kernfaserlagen (68) erstreckt;
**dadurch gekennzeichnet, dass**:
das Schaufelblatt (62) ferner ein Füllelement (76) im Hinterkantenbereich (63) hinter dem Innenhohlraum (61) umfasst, das zwischen den Hautfaserlagen (70) auf der Druckseite (60d) und den Hautfaserlagen (70) auf der Saugseite (60c) eingeschlossen ist; und
der mindestens eine Kühlkanal (78) ferner umfasst:
ein radial langgestrecktes, mehrdimensionales Plenum (78b), das mit dem mindestens einen Einlassöffnungsabschnitt (78a) verbunden ist,
eine Vielzahl von Auslassöffnungsabschnitten (78c), die sich durch die Hinterkante (60b) erstrecken, und
eine Vielzahl von Zwischendurchgangsabschnitten (78d), die von mindestens einer der Hautfaserlagen (70) und dem Füllelement (76) begrenzt sind und das radial langgestreckte, mehrdimensionale Plenum (78b) mit der Vielzahl von Auslassöffnungsabschnitten (78c) verbinden.

2. Das Schaufelblatt (62) nach Anspruch 1, wobei das radial langgestreckte, mehrdimensionale Plenum (78b) eine mäanderförmige Gestalt aufweist.

3. Das Schaufelblatt (62) nach Anspruch 2, wobei die mäanderförmige Gestalt durch eine erste Reihe radial beabstandeter Kanalsegmente (82) in einer der Kernfaserlagen (68) und eine zweite Reihe radial beabstandeter Kanalsegmente (84) in einer der Hautfaserlagen (70) bereitgestellt wird, die gegenüber der ersten Reihe radial versetzt ist, derart, dass jedes der radial beabstandeten Kanalsegmente (84) der zweiten Reihe zwei der radial beabstandeten Kanalsegmente (82) der ersten Reihe teilweise überlappt.

4. Das Schaufelblatt (62) nach Anspruch 1, 2 oder 3, wobei jeder der Zwischendurchgangsabschnitte (78d) eine äquivalente konstante Querschnittsfläche aufweist.

5. Das Schaufelblatt (62) nach Anspruch 1, 2 oder 3, wobei die Zwischendurchgangsabschnitte (78d) nicht äquivalente konstante Querschnittsflächen aufweisen.

6. Das Schaufelblatt (62) nach Anspruch 1, 2 oder 3, wobei jeder der Zwischendurchgangsabschnitte (78d) divergent ist.

7. Das Schaufelblatt (62) nach einem der vorhergehenden Ansprüche, ferner umfassend Zweigdurchgangsabschnitte (86), die die Zwischendurchgangsabschnitte (78d) miteinander verbinden.

8. Das Schaufelblatt (62) nach einem der vorhergehenden Ansprüche, wobei die Zwischendurchgangsabschnitte (78d) radial gekrümmt sind.

9. Das Schaufelblatt (62) nach einem der vorhergehenden Ansprüche, wobei das Radialrohr (72) im Hinterkantenbereich (63) ein abgerundetes Ende (74) aufweist und sich der mindestens eine Einlassöffnungsabschnitt (78a) an einer Stelle vor dem abgerundeten Ende (74) zum Innenhohlraum (61) öffnet.

10. Ein Gasturbinentriebwerk (20), umfassend:
einen Verdichterabschnitt (24);
eine Brennkammer (56) in Strömungsverbindung mit dem Verdichterabschnitt (24); und
einen Turbinenabschnitt (28) in Strömungsverbindung mit der Brennkammer (56), wobei der Turbinenabschnitt (28) Schaufelblätter (62) nach einem der vorhergehenden Ansprüche aufweist.

11. Ein Verfahren zur Herstellung eines Schaufelblatts (62), das einen Schaufelblattabschnitt (60) aufweist, der eine Druck- und eine Saugseite (60c, 60d), eine Vorderkante (60a) und einen Hinterkantenbereich (63) einschließlich einer Hinterkante (60b) definiert, wobei das Verfahren umfasst:
Auflegen erster Kernfaserlagen (68) zur Bildung eines Radialrohrs (72), das einen Innenhohlraum (61) umschließt;
teilweises Verdichten der ersten Kernfaserlagen (68) mit keramischem Matrixmaterial;
Auflegen einer zusätzlichen Kernfaserlage (68) um die teilweise verdichteten ersten Kernfaserlagen (68), um einen Kernvorformling zu bilden, wobei die zusätzliche Kernfaserlage (68) vorgeformte Schlitze aufweist;
Anordnen eines Füllelements (76) hinter dem Innenhohlraum (61) des Kernvorformlings;
Auflegen einer ersten Hautfaserlage (70a) um den Kernvorformling und das Füllelement (76), um einen ersten Zwischenvorformling zu bilden;
zumindest teilweises Verdichten des ersten Zwischenvorformlings mit zusätzlichem keramischem Matrixmaterial;
Bilden von Zwischendurchgangsabschnitten (78d) in der zumindest teilweise verdichteten ersten Hautfaserlage (70a), wobei die Zwischendurchgangsabschnitte (78d) die vorgeformten Schlitze teilweise überlappen, um ein radial langgestrecktes, mehrdimensionales Plenum (78b) bereitzustellen;
Bilden mindestens eines Einlassöffnungsabschnitts (78a) durch den Kernvorformling bis zum Innenhohlraum (61), um einen zweiten Zwischenvorformling bereitzustellen;
Auflegen einer oder mehrerer zusätzlicher Hautfaserlagen (70) um den zweiten Zwischenvorformling, um einen Endvorformling zu bilden;
Verdichten des Endvorformlings mit zusätzlichem keramischem Matrixmaterial; und
Bilden einer Vielzahl von Auslassöffnungsabschnitten (78c), die sich durch die Hinterkante (60b) erstrecken, wobei der mindestens eine Einlassöffnungsabschnitt (78a), das radial langgestreckte, mehrdimensionale Plenum (78b), die Zwischendurchgangsabschnitte (78d) und die Vielzahl von Auslassöffnungsabschnitten (78c) miteinander verbunden sind, um mindestens einen Kühlkanal (78) bereitzustellen.

## Revendications

1. Un profil aérodynamique (62) comprenant :
une section de profil aérodynamique (60) définissant des côtés pression et dépression (60c, 60d), un bord d'attaque (60a), et une région de bord de fuite (63) incluant un bord de fuite (60b), la section de profil aérodynamique (60) étant formée d'un matériau composite à matrice céramique (64) qui comprend des plis de fibres (66) disposés dans une matrice céramique (64b), les plis de fibres (66) comprenant :
des plis de fibres de noyau (68) définissant un tube radial (72) qui circonscrit une cavité interne (61), et
des plis de fibres de peau (70) définissant un extérieur de la section de profil aérodynamique (60) et s'enroulant autour des plis de fibres de noyau (68) depuis le côté pression (60d) de la région de bord de fuite (63), à travers le bord d'attaque (60a), et jusqu'au côté dépression (60c) de la région de bord de fuite (63) ; et
au moins un passage de refroidissement (78) comprenant :
au moins une section d'orifice d'entrée (78a) s'ouvrant sur la cavité interne (61) et s'étendant à travers les plis de fibres de noyau (68) ;
**caractérisé en ce que** :
le profil aérodynamique (62) comprend en outre un élément de remplissage (76) dans la région de bord de fuite (63) en aval de la cavité interne (61) et intercalé entre les plis de fibres de peau (70) du côté pression (60d) et les plis de fibres de peau (70) du côté dépression (60c) ; et
le au moins un passage de refroidissement (78) comprend en outre :
un plénum multidimensionnel allongé radialement (78b) relié à la au moins une section d'orifice d'entrée (78a),
une pluralité de sections d'orifice de sortie (78c) s'étendant à travers le bord de fuite (60b), et
une pluralité de sections de passage intermédiaires (78d) délimitées par au moins l'un des plis de fibres de peau (70) et l'élément de remplissage (76) et reliant le plénum multidimensionnel allongé radialement (78b) à la pluralité de sections d'orifice de sortie (78c).

2. Le profil aérodynamique (62) selon la revendication 1, dans lequel le plénum multidimensionnel allongé radialement (78b) a une forme serpentine.

3. Le profil aérodynamique (62) selon la revendication 2, dans lequel la forme serpentine est fournie par une première rangée de segments de canal espacés radialement (82) dans l'un des plis de fibres de noyau (68) et une seconde rangée de segments de canal espacés radialement (84) dans l'un des plis de fibres de peau (70) qui est décalée radialement par rapport à la première rangée de telle sorte que chacun des segments de canal espacés radialement (84) de la seconde rangée chevauche partiellement deux des segments de canal espacés radialement (82) de la première rangée.

4. Le profil aérodynamique (62) selon la revendication 1, 2 ou 3, dans lequel chacune des sections de passage intermédiaires (78d) présente une aire de section transversale constante équivalente.

5. Le profil aérodynamique (62) selon la revendication 1, 2 ou 3, dans lequel les sections de passage intermédiaires (78d) présentent des aires de section transversale constantes non équivalentes.

6. Le profil aérodynamique (62) selon la revendication 1, 2 ou 3, dans lequel chacune des sections de passage intermédiaires (78d) est divergente.

7. Le profil aérodynamique (62) selon l'une quelconque des revendications précédentes, comprenant en outre des sections de passage de branche (86) qui interconnectent les sections de passage intermédiaires (78d).

8. Le profil aérodynamique (62) selon l'une quelconque des revendications précédentes, dans lequel les sections de passage intermédiaires (78d) sont courbées radialement.

9. Le profil aérodynamique (62) selon l'une quelconque des revendications précédentes, dans lequel le tube radial (72) présente une extrémité arrondie (74) dans la région de bord de fuite (63), et la au moins une section d'orifice d'entrée (78a) s'ouvre sur la cavité interne (61) à un emplacement en avant de l'extrémité arrondie (74).

10. Un moteur à turbine à gaz (20) comprenant :
une section de compresseur (24) ;
une chambre de combustion (56) en communication fluidique avec la section de compresseur (24) ; et
une section de turbine (28) en communication fluidique avec la chambre de combustion (56), la section de turbine (28) comportant des profils aérodynamiques (62) selon l'une quelconque des revendications précédentes.

11. Un procédé de fabrication d'un profil aérodynamique (62) qui présente une section de profil aérodynamique (60) définissant des côtés pression et dépression (60c, 60d), un bord d'attaque (60a), et une région de bord de fuite (63) incluant un bord de fuite (60b), le procédé comprenant :
la pose de premiers plis de fibres de noyau (68) pour former un tube radial (72) qui circonscrit une cavité interne (61) ;
la densification partielle des premiers plis de fibres de noyau (68) avec un matériau de matrice céramique ;
la pose d'un pli de fibre de noyau supplémentaire (68) autour des premiers plis de fibres de noyau partiellement densifiés (68) pour former une préforme de noyau, dans lequel le pli de fibre de noyau supplémentaire (68) comprend des fentes préformées ;
l'agencement d'un élément de remplissage (76) en aval de la cavité interne (61) de la préforme de noyau ;
la pose d'un premier pli de fibre de peau (70a) autour de la préforme de noyau et de l'élément de remplissage (76) pour former une première préforme intermédiaire ;
la densification au moins partielle de la première préforme intermédiaire avec un matériau de matrice céramique supplémentaire ;
dans le premier pli de fibre de peau au moins partiellement densifié (70a), la formation de sections de passage intermédiaires (78d), dans lequel les sections de passage intermédiaires (78d) chevauchent partiellement les fentes préformées pour fournir un plénum multidimensionnel allongé radialement (78b) ;
la formation d'au moins une section d'orifice d'entrée (78a) à travers la préforme de noyau jusqu'à la cavité interne (61) pour fournir une seconde préforme intermédiaire ;
la pose d'un ou plusieurs plis de fibre de peau supplémentaires (70) autour de la seconde préforme intermédiaire pour former une préforme finale ;
la densification de la préforme finale avec un matériau de matrice céramique supplémentaire ; et
la formation d'une pluralité de sections d'orifice de sortie (78c) qui s'étendent à travers le bord de fuite (60b), la au moins une section d'orifice d'entrée (78a), le plénum multidimensionnel allongé radialement (78b), les sections de passage intermédiaires (78d), et la pluralité de sections d'orifice de sortie (78c) étant reliées pour fournir au moins un passage de refroidissement (78).
